# EUROPEAN PATENT APPLICATION

(11) **EP 4 489 211 A1**
(43) Date of publication of application: **08.01.2025**
(21) Application number: 23760137.2
(22) Date of filing: 27.02.2023
(51) Int. Cl.: H01M 50/533, H01M 10/0587

(54) **CYLINDRICAL NONAQUEOUS ELECTROLYTE SECONDARY BATTERY**

(30) Priority: 28.02.2022 JP 2022028891
(71) Applicant: Panasonic Energy Co., Ltd., Osaka 570-8511 (JP)
(72) Inventor: HAMANAKA, Keiichi, Kadoma-shi, Osaka 571-0057 (JP); IMANISHI, Yosuke, Kadoma-shi, Osaka 571-0057 (JP)
(74) Representative: Novagraaf International SA
(86) International application number: PCT/JP2023/006901
(87) International publication number: WO 2023/163139

(57) **Abstract**

According to the present invention, a battery comprises: a wound electrode body (14) formed of a long positive electrode (11) and a long negative electrode (12) that are wound with a separator therebetween; a nonaqueous electrolyte; and an external can for accommodating the electrode body (14) and the nonaqueous electrolyte. The negative electrode (12) has a non-facing part (60) that is wound, without facing the positive electrode (11), to the winding start side from a facing part (59) which faces the winding inner side of a starting end (1 1a) of the positive electrode (11) in the winding direction. The battery comprises a negative electrode lead (21) which is joined to the non-facing part (60) and is wound 0.75 turns or more.

## Description

### TECHNICAL FIELD

The present disclosure relates to a cylindrical non-aqueous electrolyte secondary battery.

### BACKGROUND ART

PATENT LITERATURE 1 discloses a conventional cylindrical non-aqueous electrolyte secondary battery. In this non-aqueous electrolyte secondary battery, a negative electrode having negative electrode mixture layers has a non-facing portion that does not face a positive electrode on the inner winding side of an electrode assembly, and the non-facing portion exists greater than or equal to two rounds. The non-aqueous electrolyte secondary battery restrains deformation of the electrode assembly on the inner winding side by providing the aforementioned non-facing portion on the inner winding side.

### CITATION LIST

### PATENT LITERATURE

PATENT LITERATURE 1: Japanese Unexamined Patent Application Publication No. 2013-137946

### SUMMARY

In a cylindrical non-aqueous electrolyte secondary battery, when the hollow of the electrode assembly is blocked due to melting of a separator in abnormal heat generation or the like, there arises a concern that a discharge path to the outside through the hollow cannot be sufficiently secured and high temperature gas cannot be smoothly discharged. It is therefore an advantage of the present disclosure to provide a cylindrical non-aqueous electrolyte secondary battery capable of restraining blockage of a hollow of an electrode assembly even in the case of abnormal heat generation to discharge gas smoothly to the outside via the hollow.

In order to solve the aforementioned problem, there is provided a cylindrical non-aqueous electrolyte secondary battery according to the present disclosure, comprising: an electrode assembly having a long strip-shaped positive electrode and a long strip-shaped negative electrode wound via a separator; a non-aqueous electrolyte; and an exterior can that houses the electrode assembly and the non-aqueous electrolyte, wherein the negative electrode includes a non-facing portion that is wound, in a state of not facing the positive electrode, to a winding starting side from a facing portion that faces an inner winding side of a starting end of the positive electrode in a winding direction, the cylindrical non-aqueous electrolyte secondary battery comprising a negative electrode lead that is joined to the non-facing portion and is wound greater than or equal to 0.75 rounds.

According to the cylindrical non-aqueous electrolyte secondary battery according to the present disclosure, since, even in the case of abnormal heat generation, blockage of the hollow of the electrode assembly is restrained, gas can be smoothly discharged to the outside via the hollow.

### BRIEF DESCRIPTION OF DRAWINGS

FIG. 1 is an axial sectional view of a cylindrical non-aqueous electrolyte secondary battery according to an embodiment of the present disclosure.
FIG. 2 is a perspective view of an electrode assembly of the non-aqueous electrolyte secondary battery.
FIG. 3 is a plan view showing a winding structure of the inner winding side in the electrode assembly.
FIG. 4 is a plan view showing an inner winding surface of the negative electrode expanded into a long strip shape.

### DESCRIPTION OF EMBODIMENTS

Hereafter, embodiments of a cylindrical non-aqueous electrolyte secondary battery of the present disclosure will be described in detail with reference to the drawings. It is originally supposed to combine properly characteristic portions of the embodiments and the modifications hereafter described to construct a new embodiment. In the embodiments below, the same configurations in the drawings are given the same signs, and their duplicate description is omitted. Moreover, the drawings include some schematic diagrams, and proportions of dimensions such as lengths, widths, and depths of components do not necessarily coincide with one another between different drawings. Moreover, in the present specification, a sealing assembly 17 side of a cylindrical non-aqueous electrolyte secondary battery 10 in the axial direction (height direction) is regarded as being on the "upside", and a bottom 68 side of an exterior can 16 in the axial direction is regarded as being on the "downside". Among the constituent components described below, constituent components that are not disclosed in the independent claim indicating the highest concept are optional constituent components, not the essential constituent components. Moreover, the present disclosure is not limited to the embodiment and its modifications below, and various improvements and alterations may occur without departing from the scope of the matters disclosed in the claims of the present application and their equivalents.

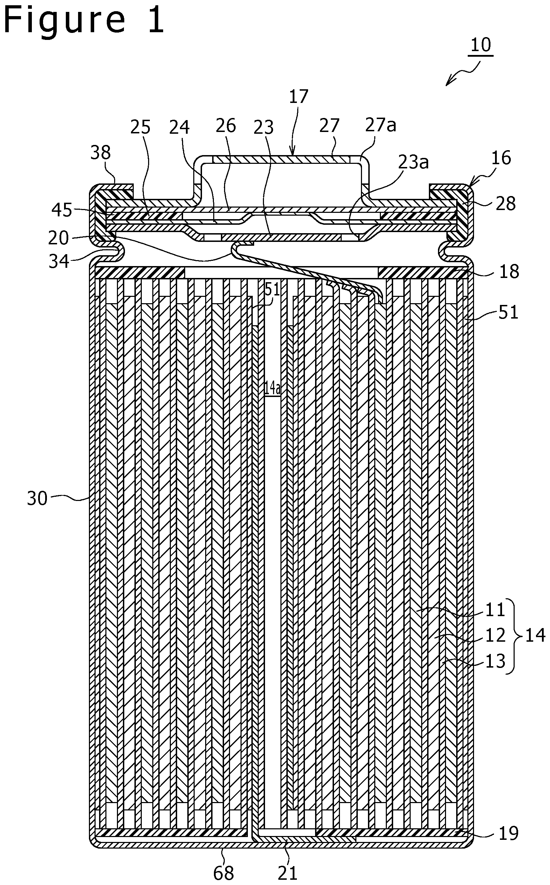

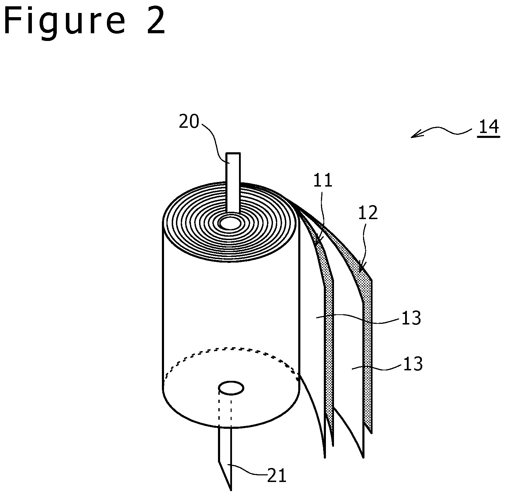

FIG. 1 is an axial sectional view of the cylindrical non-aqueous electrolyte secondary battery 10 according to an embodiment of the present disclosure, and FIG. 2 is a perspective view of an electrode assembly 14 of the non-aqueous electrolyte secondary battery 10. First, using FIG. 1 and FIG. 2, a basic configuration of the non-aqueous electrolyte secondary battery 10 is described. As shown in FIG. 1, the non-aqueous electrolyte secondary battery (hereinafter simply referred to as battery) 10 comprises the winding-type electrode assembly 14, a non-aqueous electrolyte (not shown), the bottomed tubular metal-made exterior can 16 housing the electrode assembly 14 and the non-aqueous electrolyte, and the sealing assembly 17 closing an opening of the exterior can 16. As shown in FIG. 2, the electrode assembly 14 has a winding structure having a long strip-shaped positive electrode 11 and a long strip-shaped negative electrode 12 wound via two long strip-shaped separators 13.

In order to prevent precipitation of lithium, the negative electrode 12 is formed to be larger by a certain size than the positive electrode 11. Namely, the negative electrode 12 is formed to be longer than the positive electrode 11 in a longitudinal direction and a width direction (transverse direction). Moreover, the two separators 13 are formed at least to be larger by a certain size than the positive electrode 11 and, for example, are arranged such that the positive electrode 11 is interposed therebetween. The negative electrode 12 may constitute a winding starting end of the electrode assembly 14. Nevertheless, the separators 13 generally extend beyond an end of the negative electrode 12 on the winding starting side, and ends of the separators 13 on the winding starting side constitute the winding starting end of the electrode assembly 14.

The non-aqueous electrolyte includes a non-aqueous solvent and an electrolyte salt dissolved in the non-aqueous solvent. For the non-aqueous solvent, for example, there may be used esters, ethers, nitriles, amides, a mixed solvent of two kinds or more of these, and the like. The non-aqueous solvent may contain a halogen-substituted substance having halogen atom(s) such as fluorine substituted for at least part of hydrogen atoms of these solvents. Notably, the non-aqueous electrolyte is not limited to a liquid electrolyte and may be a solid electrolyte using a gelatinous polymer or the like. For the electrolyte salt, a lithium salt such as LiPF₆ is used.

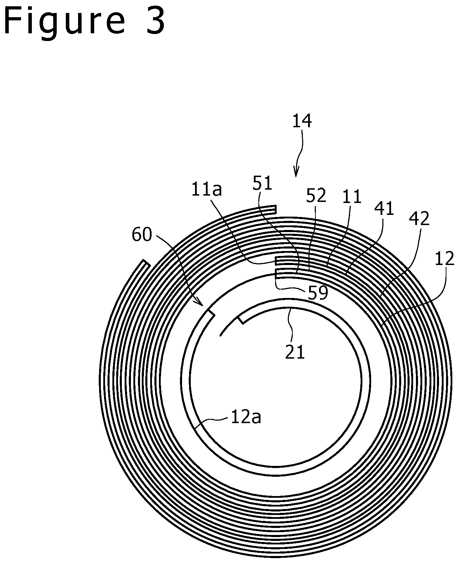

The positive electrode 11 has a positive electrode core 41 (refer to FIG. 3) and positive electrode mixture layers 42 (refer to FIG. 3) formed on both surfaces of the positive electrode core 41. For the positive electrode core 41, there can be used foil of a metal, such as aluminum or aluminum alloy, that is stable in the potential range of the positive electrode 11, a film having the metal disposed in the surface layer, and the like. The positive electrode mixture layers 42 include a positive electrode active material, a conductive agent, and a binder agent. The positive electrode 11 can be produced, for example, by applying positive electrode mixture slurry including the positive electrode active material, the conductive agent, the binder agent, and the like on the positive electrode core 41, drying the coating film and afterward compressing it to form the positive electrode mixture layers 42 on both surfaces of the positive electrode core 41.

The positive electrode active material is composed of a lithium-containing metal composite oxide as a main component. Examples of a metal element contained in the lithium-containing metal composite oxide include Ni, Co, Mn, Al, B, Mg, Ti, V, Cr, Fe, Cu, Zn, Ga, Sr, Zr, Nb, In, Sn, Ta, W, and the like. A preferable example of the lithium-containing metal composite oxide is a composite oxide containing at least one of the group consisting of Ni, Co, Mn, and Al.

Examples of the conductive agent included in the positive electrode mixture layers 42 can include carbon materials such as carbon black, acetylene black, Ketjen black, and graphite. Examples of the binder agent included in the positive electrode mixture layers 42 can include fluorine resins such as polytetrafluoroethylene (PTFE) and polyvinylidene fluoride (PVdF), polyacrylonitrile (PAN), polyimide resins, acrylic resins, polyolefin resins, and the like. There may be used, together with these resins, cellulose derivatives such as carboxymethylcellulose (CMC) or its salt, polyethylene oxide (PEO), and the like.

The negative electrode 12 has a negative electrode core 51 (refer to FIG. 3) and negative electrode mixture layers 52 (refer to FIG. 3) formed on both surfaces of the negative electrode core 51. For the negative electrode core 51, there can be used foil of a metal, such as copper or copper alloy, that is stable in the potential range of the negative electrode 12, a film having the metal disposed in the surface layer, and the like. The negative electrode mixture layers 52 include a negative electrode active material and a binder agent. The negative electrode 12 can be produced, for example, by applying negative electrode mixture slurry including the negative electrode active material, the binder agent, and the like on the negative electrode core 51, drying the coating film and afterward compressing it to form the negative electrode mixture layers 52 on both surfaces of the negative electrode core 51.

For the negative electrode active material, there is generally used a carbon material that reversibly stores and releases lithium ions. Preferable examples of the carbon material include graphite such as natural graphite such as flaky graphite, massive graphite, and earthy graphite, and artificial graphite such as massive artificial graphite and graphitized mesophase carbon microbeads. The negative electrode mixture layers 52 may include, as the negative electrode active material, a Si material containing silicon (Si). Moreover, in this case, the negative electrode mixture layer 52 may include silicon oxide expressed as SiOₓ (0.5≤x≤1.6). Moreover, for the negative electrode active material, there may be used a metal, other than Si, that is alloyed with lithium, an alloy containing the metal, a compound containing the metal, and the like.

While, for the binder agent included in the negative electrode mixture layers 52, fluorine resins, PAN, polyimide resins, acrylic resins, polyolefin resins, and the like may be used as in the case of the positive electrode 11, there is preferably used styrene-butadiene rubber (SBR) or its modified substance. In the negative electrode mixture layers 52, for example, in addition to SBR or the like, there may be included CMC or its salt, polyacrylic acid (PAA) or its salt, polyvinyl alcohol, or the like.

For the separators 13, there are used porous sheets having ion permeability and insulation ability. Specific examples of the porous sheet include a microporous thin film, woven fabric, nonwoven fabric, and the like. For the material of the separators 13, there are preferably employed polyolefin resins such as polyethylene and polypropylene, cellulose, and the like. Each separator 13 may take any of a single layer structure and a stacked structure. A heat resistant layer and/or the like may be formed on a surface of the separator 13.

As shown in FIG. 1, a positive electrode lead 20 is joined to the positive electrode 11, and a negative electrode lead 21 is joined to the winding starting side of the negative electrode 12. The battery 10 has an insulating plate 18 on the upside of the electrode assembly 14 and an insulating plate 19 on the downside of the electrode assembly 14. The positive electrode lead 20 extends to the sealing assembly 17 side through a through hole of the insulating plate 18, and the negative electrode lead 21 extends to the bottom 68 side of the exterior can 16 through the a through hole of the insulating plate 19. The positive electrode lead 20 is connected to a lower surface of a sealing plate 23 of the sealing assembly 17 by welding or the like. A terminal cap 27 constituting a top plate of the sealing assembly 17 is electrically connected to the sealing plate 23, and the terminal cap 27 works as a positive electrode terminal. Moreover, the negative electrode lead 21 is connected to an inner surface of the bottom 68 of the metal-made exterior can 16 by welding or the like, and the exterior can 16 works as a negative electrode terminal.

In the present embodiment, the positive electrode lead 20 is electrically connected to an intermediate portion such as a center portion of the positive electrode core 41 in a winding direction. Moreover, the negative electrode lead 21 is electrically connected to an end of the negative electrode core 51 on the winding starting side, and an end of the negative electrode core 51 on the winding finishing side is brought into contact with an inner surface of the exterior can 16. By electrically connecting both the winding starting side and the winding finishing side of the negative electrode 12 to the negative electrode terminal as above, current paths are shortened, and an electric resistance is reduced. Nevertheless, not bringing the end of the negative electrode core on the winding finishing side into contact with the inner surface of the exterior can, one negative electrode lead may be electrically connected to the end of the negative electrode core on the winding finishing side. Otherwise, the electrode assembly may have two negative electrode leads, one of the negative electrode leads may be electrically connected to the end of the negative electrode core on the winding starting side, and the other of the negative electrode leads may be electrically connected to the end of the negative electrode core on the winding finishing side. Otherwise, the negative electrode and the exterior can may be electrically connected by bringing the end of the negative electrode core on the winding finishing side into contact with the inner surface of the exterior can, not using a negative electrode lead.

The battery 10 further comprises a resin-made gasket 28 arranged between the exterior can 16 and the sealing assembly 17. The sealing assembly 17 is crimped and fixed to the opening of the exterior can 16 via the gasket 28. Thereby, the inner space of the battery 10 is hermetically sealed. The gasket 28 is pinched and held by the exterior can 16 and the sealing assembly 17 and insulates the sealing assembly 17 from the exterior can 16. The gasket 28 has a role as a sealing material that keeps gastightness inside the battery and a role as an insulating material that insulates the exterior can 16 and the sealing assembly 17 from each other.

The exterior can 16 houses the electrode assembly 14 and the non-aqueous electrolyte, and has a shoulder 38, a grooved portion 34, a tubular portion 30, and the bottom 68. The grooved portion 34 can be formed, for example, by performing spinning processing on a part of the side wall of the exterior can 16 inward in a radial direction to recess it into an annular shape inward in the radial direction. The shoulder 38 is formed, when the sealing assembly 17 is crimped and fixed to the exterior can 16, by folding an upper end of the exterior can 16 inward toward a peripheral edge 45 of the sealing assembly 17.

The sealing assembly 17 has a structure in which the sealing plate 23, a lower vent member 24, an insulating member 25, an upper vent member 26, and the terminal cap 27 are stacked in the order from the electrode assembly 14 side. Each of the members constituting the sealing assembly 17 has a disc shape or a ring shape, for example, and the members except the insulating member 25 are electrically connected to one another. The sealing plate 23 has at least one through hole 23a. Moreover, the lower vent member 24 and the upper vent member 26 are connected at their center portions, and between their peripheral edges, the insulating member 25 is interposed.

When abnormal heat generation of the battery 10 occurs and an internal pressure of the battery 10 rises, the lower vent member 24 deforms so as to push the upper vent member 26 upward to the terminal cap 27 side and ruptures, and a current path between the lower vent member 24 and the upper vent member 26 is disconnected. When the internal pressure further rises, the upper vent member 26 ruptures and gas is discharged from a through hole 27a of the terminal cap 27. This discharge of the gas can prevent the internal pressure of the battery 10 from excessively rising and the battery 10 from blowing up, and safety of the battery 10 can be enhanced.

FIG. 3 is a plan view showing a winding structure of the inner winding side in the electrode assembly 14. Notably, in FIG. 3, illustration of the separators is omitted. As shown in FIG. 3, the negative electrode 12 includes a non-facing portion 60 that is wound, in the state of not facing the positive electrode 11, to the winding starting side from a facing portion 59 that faces an inner winding side of a starting end 1 1a of the positive electrode 11 in the winding direction. The non-facing portion 60 is preferably wound less than or equal to two rounds, and is still preferably wound less than or equal to 1.5 rounds.

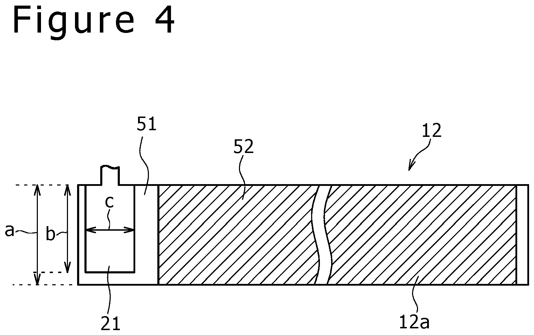

The battery 10 comprises the negative electrode lead 21 that is joined to the non-facing portion 60 and is wound greater than or equal to 0.75 rounds. In the present embodiment, the negative electrode lead 21 is joined to an inner winding surface 12a of the negative electrode core 51, the inner winding surface 12a constituting the innermost periphery of the negative electrode 12. The negative electrode lead 21 is wound with a length of less than or equal to one round. FIG. 4 is a plan view showing the inner winding surface 12a of the negative electrode 12 expanded into a long strip shape. As shown in FIG. 4, when a length of the long strip-shaped negative electrode 12 in the width direction is a [mm], and a length of a covering margin of the negative electrode lead 21 in the width direction on the negative electrode 12 is b [mm], b≥0.8a is preferably established.

According to the battery 10, there is included the non-facing portion 60 that is wound from the aforementioned facing portion 59 to the winding starting side in the state of not facing the positive electrode 11, and the negative electrode lead 21 is joined to the non-facing portion 60 and is wound greater than or equal to 0.75 rounds. Accordingly, the periphery of a hollow 14a of the electrode assembly 14 can be enclosed by the negative electrode lead 21 high in rigidity over a long distance in a circumferential direction. Therefore, even when abnormal heat generation of the battery 10 occurs, blockage of the hollow 14a is restrained. Consequently, since gas can be smoothly discharged to the outside via the hollow 14a, safety of the battery 10 is improved.

Moreover, since the negative electrode lead 21 is wound with a length of less than or equal to one round, the capacity of the battery 10 is readily increased. Moreover, when b≥0.8a is established, a wide range of the portion of the inner winding surface 12a of the negative electrode 12 is coated by the negative electrode lead 21 high in rigidity. Therefore, the hollow 14a is effectively restrained from deforming, and the safety of the battery 10 is further improved.

### (Example 1)

### [Production of Positive Electrode]

As the positive electrode active material, aluminum-containing lithium nickel cobalt oxide (LiNi_{0.88}Co_{0.09}Al_{0.03}O₂) was used. After that, 100 pts. mass of LiNi_{0.88}Co_{0.09}Al_{0.03}O₂ (positive electrode active material), 1.0 pt. mass of acetylene black, and 0.9 pts. mass of polyvinylidene fluoride (PVDF) (binder agent) were mixed in a solvent of N-methylpyrrolidone (NMP) to produce the positive electrode slurry. The produced positive electrode slurry was uniformly applied on both surfaces of a positive electrode core of aluminum foil with a thickness of 15 µm. Next, after, in a drying machine, NMP was removed at a temperature greater than or equal to 100°C and less than or equal to 150°C, compression was performed by a roll press machine to produce a positive electrode plate. The positive electrode plate was cut to have a thickness of 0.144 mm, a width of 62.6 mm, and a length of 860 mm to produce a positive electrode.

### [Production of Negative Electrode]

As the negative electrode active material, 95 pts. mass of graphite powder and 5 pts. mass of Si oxide were mixed. After that, 1 pt. mass of CMC as a thickener agent and 1 pt. mass of styrene-butadiene rubber as the binder agent were added to prepare the negative electrode slurry. The negative electrode slurry was applied on both surfaces of a negative electrode core of copper foil with a thickness of 8 µm to form negative electrode mixture layers. Next, after being dried, it was compressed with compression rollers to adjust the thicknesses of the negative electrode mixture layers so as to give a negative electrode thickness of 0.160 mm, affording a negative electrode. The negative electrode plate was cut to have a width of 64.2 mm and a length of 959 mm to produce the negative electrode.

### [Attachment of Negative Electrode Lead]

To a negative electrode core exposed portion at the end of the negative electrode on the winding starting side, there was attached a nickel-made negative electrode lead that had a dimension c of 12.6 mm in the longitudinal direction of the negative electrode (a length equivalent to the one-round length of the innermost periphery of the electrode assembly) and had a length dimension b of 61.4 mm by which the negative electrode lead overlapped with the negative electrode in the negative electrode width direction (the length of about 96% of the negative electrode width).

### [Production of Electrode Assembly]

The positive electrode and the negative electrode were wound via polyethylene-made separators, and tapes made of polypropylene (PP) with a width of 12 mm, a thickness of 30 µm, and a length of 50.0 mm were pasted on the outermost periphery within 10 mm at both ends of the electrode assembly to produce the electrode assembly. In this stage, a negative electrode core exposed portion was arranged on the outermost peripheral surface of the electrode assembly.

### [Preparation of Non-Aqueous Electrolyte Solution]

To 100 pts. mass of a mixed solvent composed of ethylene carbonate (EC) and dimethylmethyl carbonate (DMC) (EC:DMC=1:3 in volume ratio), 5 pts. mass of vinylene carbonate (VC) was added, and LiPF₆ was dissolved in 1.5 mole/liter to prepare a non-aqueous electrolyte solution.

### [Production of Cylindrical Battery]

Insulating plates were arranged on the upside and the downside of the electrode assembly, the negative electrode lead was welded to a battery case, the positive electrode lead was welded to the sealing assembly having an internal pressure-operational safety valve, and the electrode assembly and insulating plates were housed inside a battery case. After that, the non-aqueous electrolyte solution was injected inside the battery case in a reduced pressure scheme. In the final stage, by crimping the opening end of the battery case onto a sealing plate via a gasket, a cylindrical non-aqueous electrolyte secondary battery was produced. The capacity of the battery was 4600 mAh.

### (Example 2)

A cylindrical non-aqueous electrolyte secondary battery was produced different from that of Example 1 only in that a nickel-made negative electrode lead that had the dimension c of 9.4 mm in the longitudinal direction of the negative electrode (the length of 75% of the one-round length of the innermost periphery of the winding-type electrode assembly) and had the length dimension b of 61.4 mm by which the negative electrode lead overlapped with the negative electrode in the negative electrode width direction was attached to the negative electrode core exposed portion at the end of the negative electrode on the winding starting side. The capacity of the battery was 4600 mAh.

### (Comparative Example 1)

A cylindrical non-aqueous electrolyte secondary battery was produced different from that of Example 1 only in that a nickel-made negative electrode lead that had the dimension c of 3 mm in the longitudinal direction of the negative electrode (the length of 24% of the one-round length of the innermost periphery of the winding-type electrode assembly) and had the length dimension b of 61.4 mm by which the negative electrode lead overlapped with the negative electrode in the negative electrode width direction was attached to the negative electrode core exposed portion at the end of the negative electrode ion the winding starting side. The capacity of the battery was 4600 mAh.

### (Comparative Example 2)

A cylindrical non-aqueous electrolyte secondary battery was produced different from that of Example 1 only in that a nickel-made negative electrode lead that had the dimension c of 7.5 mm in the longitudinal direction of the negative electrode (the length of 60% of the one-round length of the innermost periphery of the winding-type electrode assembly) and had the length dimension b of 61.4 mm by which the negative electrode lead overlapped with the negative electrode in the negative electrode width direction was attached to the negative electrode core exposed portion at the end of the negative electrode on the winding starting side. The capacity of the battery was 4600 mAh.

### <Firing Test>

Each battery thus produced was charged at 0.3C of constant current (CC), and after that, was charged at 4.2 V of constant voltage (CV) until reaching 0.02C of charge cut-off current. After that, the charged battery was arranged in a copper tube comprising a heater and heated up to 650°C to cause the battery to fire, and after firing, the presence or absence of blowup on the side wall of the can of the battery was examined. For each of Examples and Comparative Examples, ten firing tests were performed to evaluate the rate of blowups from the can side wall.

### [Test Results]

**[Table 1]**

| | Dimensions of Negative Electrode Lead | | | | Firing Test |
|---|---|---|---|---|---|
| | Longitudinal-Directional Dimension c [mm] | Ratio of c Relative to Length of Innermost Periphery [%] | Width-Directional Dimension b [mm] | Ratio of b Relative to Electrode Plate Width a [%] | Number of Blowups on Can Side Wall/Number of Tests |
| Example 1 | 12.6 | 100 | 61,4 | 96 | 0/10 |
| Example 2 | 9.4 | 75 | 61.4 | 96 | 0/10 |
| Comparative Example 1 | 3.0 | 24 | 61.4 | 96 | 3/10 |
| Comparative Example 2 | 7.5 | 60 | 61.4 | 96 | 2/10 |

While for Comparative Examples 1 and 2, blowups from the can side wall were confirmed, for Examples 1 and 2, no blowup from the can side wall in battery firing was confirmed. It can be understood that the gas discharge path was sufficiently secured by arranging the negative electrode lead high in rigidity over a predetermined range around the hollow. It is inferred that for Comparative Examples 1 and 2, since the negative electrode lead was not arranged over a sufficient range around the hollow, the gas discharge path became insufficient due to blockage or the like of the hollow of the electrode assembly. Based on the tests results above, by winding the negative electrode lead joined to the non-facing portion greater than or equal to 0.75 rounds, blockage of the hollow is restrained even in the case of abnormal heat generation of the battery, and thereby, gas can be smoothly discharged to the outside via the hollow.

### REFERENCE SIGNS LIST

10 Battery, 11 Positive electrode, 11a Starting end, 12 Negative electrode, 12a Inner winding surface, 13 Separator, 14 Electrode assembly, 14a Hollow, 16 Exterior can, 17 Sealing assembly, 18, 19 Insulating plate, 20 Positive electrode lead, 21 Negative electrode lead, 23 Sealing plate, 23a Through hole, 24 Lower vent member, 25 Insulating member, 26 Upper vent member, 27 Terminal cap, 27a Through hole, 28 Gasket, 30 Tubular portion, 34 Grooved portion, 38 Shoulder, 41 Positive electrode core, 42 Positive electrode mixture layer, 45 Peripheral edge, 51 Negative electrode core, 52 Negative electrode mixture layer, 59 Facing portion, 60 Non-facing portion, 68 Bottom

## Claims

1. A cylindrical non-aqueous electrolyte secondary battery, comprising:
an electrode assembly having a long strip-shaped positive electrode and a long strip-shaped negative electrode wound via a separator;
a non-aqueous electrolyte; and
an exterior can that houses the electrode assembly and the non-aqueous electrolyte, wherein
the negative electrode includes a non-facing portion that is wound, in a state of not facing the positive electrode, to a winding starting side from a facing portion that faces an inner winding side of a starting end of the positive electrode in a winding direction, the cylindrical non-aqueous electrolyte secondary battery comprising
a negative electrode lead that is joined to the non-facing portion and is wound greater than or equal to 0.75 rounds.

2. The cylindrical non-aqueous electrolyte secondary battery according to claim 1, wherein the negative electrode lead is wound less than or equal to one round.

3. The cylindrical non-aqueous electrolyte secondary battery according to claim 1 or 2, wherein when a length of the long strip-shaped negative electrode in a width direction is a, and a length of a covering margin of the negative electrode lead in the width direction on the negative electrode is b, b≥0.8a is established.
